# DEMANDE DE BREVET EUROPEEN

(11) **EP 3 912 480 A1**
(43) Date de publication de la demande: **24.11.2021**
(21) Numéro de dépôt: 21173715.0
(22) Date de dépôt: 12.05.2021
(51) Int. Cl.: A23L 13/00, A01K 67/00, A23J 1/02

(54) **PROCÉDÉ D'ABATTAGE ET DE CONSERVATION DE LARVES D'INSECTES ET/OU D'INSECTES, INSECTES, LARVES, PROCÉDÉ DE FABRICATION D'UN ALIMENT ET ALIMENT ASSOCIÉS**

(30) Priorité: 20.05.2020 FR 2005279
(71) Demandeur: Fungfeed, 59510 Hem (FR)
(72) Inventeur: BAUDIN, Victoire, 59510 HEM (FR)
(74) Mandataire: Ipside

(57) **Abrégé**

La présente invention concerne un procédé d'abattage et de conservation de larves et/ou d'insectes lesquels sont disposés de manière à former un volume de larves et/ou d'insectes. De manière caractéristique, on soumet ledit volume de larves d'insectes à de la vapeur d'eau pendant une durée t1 suffisante pour que la température à l'intérieur dudit volume et en particulier au centre dudit volume atteigne une valeur égale ou supérieure à 50°C et notamment égale à 60°C, 70°C, 80°C, 90°C ou 95°C, l'on surgèle/congèle lesdites larves et/ou insectes abattus, éventuellement après leur refroidissement jusqu'à une température donnée et on stocke lesdites larves et/ou insectes abattus et congelés/surgelés à une température négative. La présente invention concerne également une larve d'insecte et/ou un insecte abattu et conservé un procédé de fabrication d'un aliment utilisant de telles larves et/ou insectes et un aliment obtenu par le procédé.

## Description

### Domaine technique

La présente invention concerne un procédé d'abattage et de conservation de larves d'insectes ou d'insectes pouvant être mis en œuvre de manière industrielle, une larve et/ou insecte abattu par ce procédé, un procédé de fabrication d'un aliment utilisant cette larve et/ou cet insecte et un aliment obtenu à partir de ladite larve et/ou dudit insecte.

### Art Antérieur

Depuis quelques années, on envisage d'utiliser les insectes et leurs larves comme source de protéines animales pour l'alimentation animale et humaine. L'élevage des insectes a un impact écologique bien moindre que l'élevage des mammifères ou même que l'élevage des poulets. Par ailleurs, l'entomophagie est largement répandue dans certaines cultures d'Amérique latine, d'Afrique et d'Asie.

Le document intitulé "Quality Aspects of Insects as Food-Nutritional, Sensory, and Related Concepts" de M. Elhassan & al, publié dans la revue Foods le 12 mars 2019 indique que les larves de ténébrion peuvent être cuisinées de diverse manière en vue de leur consommation immédiate après leur cuisson. Ainsi, selon ce document, les larves de ténébrion peuvent être consommées après avoir été cuites à la vapeur, bouillies ou grillées au four. Il s'agit là d'une cuisson des larves qui permet également de les abattre.

Le document intitulé « Effect of blanching followed by refrigerated storage or industrial microwave drying on the microbial load of yellow mealworm larvae" de D. Vandeweyer, publié en 2017 dans la revue Food control (pages 311-314) divulgue une technique d'abattage des larves de ténébrion selon laquelle des larves sont plongées dans de l'eau bouillante pendant 10, 20 ou 40s. Les larves sont ensuite refroidies à l'eau glacée puis mises sous vide avant d'être stockées au réfrigérateur à 3°C. Les larves peuvent également être séchées au micro-onde après le blanchiment à l'eau bouillante. Ce document indique que ces techniques permettent de réduire la charge bactérienne mais ne suffisent pas pour détruire les endospores.

A l'échelle industrielle, les insectes ou leurs larves doivent être abattus puis conservés pour pouvoir être utilisés ensuite dans des procédés de fabrication de préparations alimentaires. La plupart du temps, les insectes ou leurs larves sont séchés puis réduits en poudre, formant une farine protéinée facile à utiliser et stable d'un point de vue microbiologique. **Ainsi, le document** FR 3 061 856 A1 **décrit un procédé d'obtention d'une farine d'insecte et une farine, laquelle est donc une poudre sèche dont l'activité de l'eau est très basse. Dans ce document, les larves sont abattues à la vapeur puis desséchées avant d'être broyées en farine. Les larves ne sont jamais congelées.**

**Par ailleurs, le document** EP 3 262 958 A1 **divulgue une composition alimentaire à base d'insectes non réduits en farine. Les larves sont abattues par trempage dans de l'eau bouillante pendant 2 minutes puis congelées à -18°C. La composition alimentaire obtenue à partir des larves congelées comprend un liant qui permet d'optimiser la texture du hachis d'insectes obtenu**

La farine d'insecte ne peut pas entrer telle quelle dans la fabrication de tous les aliments, en particulier dans la fabrication des aliments humides, de type pâté, par exemple.

Par ailleurs, le blanchiment des larves par trempage dans de l'eau bouillante ne permet pas d'abattre de manière reproductible un grand nombre de larves. En effet, les larves se gonflent d'eau ce qui réduit le volume d'eau utilisé pour le blanchiment. Il est donc nécessaire de compléter à chaque passage le volume d'eau utilisé pour le blanchiment puis de le refaire chauffer. De plus, la réutilisation de l'eau ayant déjà servi au blanchiment permet certes de gagner du temps et d'économiser de l'eau mais elle n'est pas sûre d'un point de vue hygiénique, les larves étant lavées par l'eau du blanchiment, elles salissent cette dernière qui se concentre alors en bactéries, mycobactéries et spores, lesquelles ne sont pas nécessairement détruites par la chaleur.

D'autre part, le document intitulé "Effect of different blanching treatments on microbiological profile and quality of the mealworm" de Mancini & al et publié dans la revue Journal of insects as food and feed en 2019 (pages 225 à 234) indique qu'il est souhaitable d'éviter le brunissement des larves de ténébrion après leur abattage. Le blanchiment à 60°C pendant 5 min permet de tuer les larves et d'éviter leur brunissement. En effet, le brunissement est responsable d'une moindre digestibilité des protéines et altère la saveur des larves ; il doit donc être éviter chez les larves abattues. **Ce document indique donc que la méthode d'abattage des larves a un influence sur les larves abattues, en particulier sur leur composition et les réactions enzymatiques qui peuvent encore avoir lieu pendant la congélation et après la décongélation, lors de l'utilisation des larves.**

Un but de la présente invention est de proposer une méthode d'abattage et de conservation d'une larve d'insecte et/ou d'un insecte qui puisse être facilement mise en œuvre à l'échelle industrielle.

Un autre but de la présente invention est de proposer une méthode d'abattage et de conservation d'une larve d'insecte qui évite le brunissement de la larve abattue.

Un autre but de la présente invention est de proposer une méthode d'abattage et de conservation d'une larve d'insecte et/ou d'un insecte qui permet de conserver la larve et/ou l'insecte abattu par congélation/surgélation sans le réduire en poudre et sans le sécher.

Un autre but de la présente invention est de fournir une méthode d'abattage et de conservation d'une larve d'insecte et/ou d'un insecte, laquelle peut ensuite être utilisée pour la fabrication d'une préparation alimentaire, notamment une préparation alimentaire humide dont la texture, l'odeur et la couleur sont faciles à contrôler pour être en accord avec les souhaits et goûts des consommateurs.

**Un autre but de la présente invention est de fournir une méthode d'abattage et de conservation d'une larve d'insecte et/ou d'un insecte, laquelle peut ensuite être utilisée pour la fabrication d'une préparation alimentaire humide dont la texture est adaptée sans nécessité d'ajouter un liant.**

La présente invention concerne un procédé d'abattage et de conservation de larves d'insectes et/ou d'insectes lesquelles sont disposés de manière à former un volume, selon lequel, de manière caractéristique, on soumet ledit volume de larves d'insectes et/ou d'insectes à de la vapeur d'eau pendant une durée t1 suffisante pour que la température à l'intérieur dudit volume et en particulier au centre dudit volume atteigne une valeur égale ou supérieure à 50°C et notamment égale à 60°C, 70°C, 80°C, 90°C ou 95°C, on surgèle/congèle lesdites larves et ou lesdits insectes abattus, éventuellement après leur refroidissement jusqu'à une température donnée et on stocke lesdites larves et/ou lesdits insectes abattus et congelés/surgelés à une température négative.

Le terme « volume de larves et/ou d'insectes» n'est pas limité selon l'invention. Le terme volume désigne un ensemble de larves et/ou d'insectes déposés sur support (tapis roulant ou autre) et un ensemble de larves et/ou d'insectes déposés dans un contenant avec des bords, le volume étant délimité par les bords du contenant.

La vapeur d'eau est avantageusement de la vapeur d'eau à 100°C et à pression atmosphérique. La pression n'est néanmoins pas limitée à la pression atmosphérique. La durée totale du traitement à la vapeur n'est pas limitée selon l'invention. Ainsi, si la durée t1 permet d'obtenir une température de 50°C stable, la durée du traitement à la vapeur est la durée suffisante pour obtenir l'abattage des larves. Elle peut être déterminée expérimentalement en fonction du volume de larves traité. Si la température obtenue au bout de la durée t1 est de l'ordre de 70°C, 80°C, 90°C ou 95°C, la durée du traitement peut être égale à t1 car les larves sont mortes durant le laps de temps nécessaire pour atteindre la température au cœur à t1, la température létale pour les larves étant de 50°C.

L'utilisation de la vapeur permet un procédé reproductible et simple à mettre en œuvre, contrairement au blanchiment par immersion dans l'eau chaude. Le procédé de l'invention s'apparente à un procédé de blanchiment.

Les larves et/ou insectes peuvent être congelés à -20°C par froid mécanique puis stockés à -18°C comme un aliment frais surgelé. Ils peuvent également être surgelés à -30°C par froid cryogénique puis stockés à -18°C. Ils peuvent dans tous les cas, être stockés à -20°C ou -18°C.

Dans un mode de réalisation particulier, le procédé est mis en œuvre uniquement sur des larves d'insectes.

Avantageusement, on maintient la température au centre dudit volume à une valeur supérieure à 50°C et notamment égale à 60°C, 70°C, 80°C, 90°C ou 95°C pendant une durée t2 telle que la durée totale de l'étape de traitement à la vapeur est supérieure ou égale à 6min, 7min, 8min, 9min, 10 min, 11 min et inférieure ou égale à 20min.

En effet, la Demanderesse a constaté que, de manière surprenante, la durée de l'étape de blanchiment à la vapeur affectait certaines caractéristiques d'un produit obtenu par cuisson des larves et/ou insectes abattus et conservés selon le procédé de l'invention. Si la durée de blanchiment est trop courte, on observe une pellicule grise sur le dessus du produit cuit et/ou un changement rapide de couleur vers une teinte grisâtre ou verdâtre qui rebute le consommateur. Sans que la Demanderesse ne soit liée à une telle explication, il semblerait que plus la durée du blanchiment est longue, plus il permet de désactiver de réactions enzymatiques. La larve et l'insecte étant un organisme entier, de nombreuses réactions enzymatiques sont susceptibles de se produire contrairement à de la viande qui n'est qu'un morceau de muscle.

La larve et/ou l'insecte devant être abattu(e) n'est pas limité(e) selon l'invention. Il peut s'agir de larve de la mouche soldat noire (*Hermetia lllucens*), de la larve de la mouche domestique (*Musca domestica*), de la larve du ténébrion meunier (*Tenebrio molitor*), de la larve du petit ténébrion mat (*Alphitobius diaperinus*), de la larve du grillon domestique (*Acheta domesticus*), de la larve du grillon domestique tropical (*Gryllodes sigillatus*), de la larve du grillon des steppes (*Gryllus assimilis*) et les mélanges de ces larves ou encore des insectes précités, seuls ou en mélange et éventuellement, en mélange avec des larves du même insecte ou d'un ou plusieurs insectes différents choisi parmi ceux précités.

Selon un mode de mise en œuvre particulier, ledit volume de larves et/ou insectes traité peut être par exemple sensiblement égal à ou supérieur à 4000 cm³ et inférieur ou égale à 5000 cm³.

Le procédé de l'invention peut être mis en œuvre dans un tunnel de vapeur, les larves et/ou insectes étant disposées sur un tapis roulant ou dans un four à vapeur. Dans ce dernier cas, les larves et/ou insectes sont de préférence disposés dans un contenant thermiquement conducteur. Le procédé est ainsi facile à mettre en œuvre. Il suffit ensuite de surgeler les larves et/ou insectes contenus dans leur contenant à -20°C, en particulier après refroidissement à une température égale ou inférieure à 10°C, par exemple.

Avantageusement, quel que soit le mode de mis en œuvre du procédé de l'invention, la durée de l'étape de traitement à la vapeur est telle que la prise d'eau en masse des larves après traitement à la vapeur est inférieure ou égale à 20%, notamment inférieure ou égale à 15% et égale ou supérieure à 7%. Cette prise d'eau est suffisante pour obtenir ensuite une bonne surgélation des larves sans altération.

Avantageusement, la durée de l'étape de traitement à la vapeur et la température de l'étape de congélation/surgélation sont telles que la prise d'eau de la larve abattue et surgelée/congelée est sensiblement égale ou supérieure à 3%, notamment sensiblement égale à 5% et sensiblement égale ou inférieure à 9% et notamment sensiblement égale à 7%.

La présente invention concerne également une larve et/ou un insecte pouvant être obtenu selon le procédé de l'invention. Avantageusement, la présente invention concerne une larve d'insecte pouvant être obtenue selon le procédé de l'invention. De manière caractéristique, la larve et/ou l'insecte abattu et congelé/surgelé de l'ivention présente une densité égale ou supérieure à 295 et égale ou inférieure à 325 et/ou une activité de l'eau égale ou supérieure à 0,960 et égale ou inférieure à 0,981 et/ou une valeur énergétique inférieure ou égale à 210 kcal/100g et/ou une teneur en glucides supérieure ou égale à 4,0 g/100g et/ou une teneur en lipides inférieure ou égale à 10g/100g et/ou une teneur en protéines égale ou inférieure à 22g/100g. Les valeurs précitées peuvent être obtenues notamment après 78 jours de stockage à -18°C/-20°C. Selon un mode de réalisation particulièrement avantageux, la larve et/ou l'insecte abattu et congelé/surgelé présente une densité égale ou supérieure à 295 et égale ou inférieure à 325 et une activité de l'eau égale ou supérieure à 0,960 et égale ou inférieure à 0,981.

La présente invention concerne plus particulièrement des larves surgelées/congelées telles que précitées. Elles peuvent se présenter sous la forme d'un bloc compact ou être séparées les unes des autres. Les larves et/ou insectes peuvent également se présenter sous la forme de morceaux ou de purée.

La Demanderesse a constaté que les larves et/ou insectes abattus et stockés selon le procédé de l'invention présentaient une activité de l'eau moindre que les larves obtenues par blanchiment à l'eau. Elles sont donc plus stables d'un point de vue microbiologique.

Par ailleurs, les larves et/ou insectes abattus et conservés selon le procédé de l'invention contenant plus d'eau que les larves abattues par les autres méthodes, elles sont plus faciles à utiliser pour la préparation d'un aliment humide de type pâté pouvant être destiné à l'alimentation animale ou humaine. La teneur en eau va faciliter la fabrication d'un aliment humide et permettre d'ajuster facilement la texture dans le cas d'un aliment humide, notamment de type pâté(e).

La présente invention concerne également un procédé de fabrication d'un aliment selon lequel, de manière caractéristique, on réduit en morceaux des larves et/ou des insectes surgelés selon l'invention et l'on mélange lesdits morceaux avec une composition alimentaire laquelle contient une farine d'au moins une céréale et/ou au moins un fruit et/ou au moins un légume, notamment au moins un fruit et/ou au moins un légume surgelé(s) et l'on fait cuire ledit mélange.

Tous les ingrédients peuvent être mélangés surgelés de manière à réduire la croissance bactérienne et l'échauffement de la matière.

Les larves et/ou insectes de l'invention peuvent donc être utilisés pour la fabrication de croquettes par extrusion à haute température ou pour la fabrication de croquettes par extrusion à 90°C basse pression notamment avec un extrudeuse Wenger TT3630. Les larves et/ou insectes de l'invention peuvent également être utilisés pour la fabrication d'un aliment humide de type pâtée, pâté, mousse, émincés ou boulettes en sauce, par exemple. L'aliment humide peut être obtenu par appertisation et/ou être stérilisé durant sa cuisson.

Le procédé de fabrication d'un aliment selon l'invention concerne donc tout aliment cuit, de type croquette ou de type pâtée, pâté, mousse, émincés ou boulettes en sauce, en particulier.

S'agissant en particulier d'un aliment destiné à un animal de compagnie (chien ou chat), l'aliment selon l'invention a l'avantage d'être hypoallergénique car il peut ne contenir qu'une seule source de protéine animale. Cette source étant une larve d'insecte qui n'a pas ou rarement été ingérée par l'animal, il en résulte que l'aliment de l'invention a peu de risques d'être allergisant. De plus, l'utilisation d'une céréale telle que le sorgho qui est rarement utilisée dans l'alimentation animale et même humaine en Europe, en Asie et en Amérique du Nord, conforte le caractère hypoallergénique de l'aliment de l'invention.

La présente invention concerne également un aliment qui contient des larves et/ou insectes selon l'invention et/ou au moins un fruit et/ou au moins un légume et/ou au moins une céréale. Cet aliment peut être un pâté, une pâtée pour chat ou chien ou des croquettes, une mousse, des boulettes en sauce, un émincé ou tout autre type d'aliment à destination des animaux de compagnie ou d'autres animaux carnivores ou omnivores (notamment les animaux que l'on appelle les nouveaux animaux de compagnie (NAC), par exemple, poules, oiseaux, reptiles) pouvant éventuellement être l'humain. L'aliment, en particulier lorsqu'il est destiné à l'humain, peut également comprendre d'autres sources de protéines animales telles que, par exemple, de la viande de porc, de lapin, de poulet, de poule, de poisson, de gibier et/ou des abats.

Le fruit n'est pas limité selon l'invention. Il peut être choisi parmi la pomme, la poire, les baies comme la myrtille, le raisin, la banane, l'abricot, la pêche, la fraise, la pastèque ou le melon. Le fruit est choisi en fonction de l'animal pour lequel est destiné l'aliment.

La présente invention concerne également une farine obtenue à partir des larves et/ou insectes de l'invention.

Le légume n'est pas limité selon l'invention. Il peut être choisi parmi la pomme de terre, la carotte, l'épinard, la salade en particulier la laitue, le chou, le céleri, le haricot vert, le petit pois, la courge, la courgette, le potiron, la citrouille et le concombre, par exemple. Le légume est choisi en fonction de l'animal pour lequel est destiné l'aliment. La céréale n'est pas limitée selon l'invention. Elle peut être choisie parmi le riz, le millet, le blé, l'orge, l'avoine, les graminées comme le sorgho, le sarrasin, et les herbacées comme l'amarante.

L'aliment de l'invention et la composition alimentaire utilisée dans le procédé de fabrication d'un aliment selon l'invention peut également comprendre une légumineuse comme la lentille, le pois chiche, le pois cassé, le haricot sec blanc ou rouge. L'aliment peut également comprendre un champignon aérien comme le champignon de Paris ou le pleurote, par exemple.

Au sens de la présente invention, le terme « pâté » désigne une préparation contenant des protéines animales et un légume. Le pâté est destiné à l'alimentation humaine. Le terme englobe les pâtés en croûte et les terrines cuites au four.

Au sens de la présente invention, le terme « pâtée » désigne un aliment de type pâté tel que précité mais destiné à l'alimentation animale, en particulier pour les chats et les chiens.

La présente invention, ses caractéristiques et les divers avantages qu'elle procure apparaitront mieux à la lecture des exemples qui suivent, présentés à titre d'exemples non limitatifs et qui font référence aux dessins annexés sur lesquels :
- La [Fig. 1] représente une photographie d'une boîte de pâtée pour chat obtenue avec des larves abattues par surgélation ; et
- La [Fig. 2] représente une photographie d'une boîte de pâtée pour chat obtenue avec des larves abattues par le procédé de l'invention.

### EXEMPLES

Les larves utilisées sont des larves de ténébrion meunier.

1) Comparaison de l'abattage par le froid et de l'abattage par blanchiment par immersion dans l'eau et de l'abattage à la vapeur d'eau.

Le tableau 1 suivant regroupe les méthodes d'abattage mises en œuvre sur des larves de ténébrion dont la température est de 20°C avant abattage.

**[tableau 1]**

| Méthode | Cryogénisation | Froid mécanique | four vapeur | Blanchiment immersion dans de l'eau |
|---|---|---|---|---|
| Température ambiance | -60°C | -30°C | Vapeur d'eau à 100°C | Eau à 100°C |
| Température à cœur | -24°C | -24°C | a) 95°C | Pas de sonde |
| | | | b) < 50°C | |
| | | | c) 95°C | |
| | | | d) 95°C | |
| Temps | 3h environ | Plus de 5h | a) Plus de 25 min | 2 min |
| | | | b) 2 min 40s | |
| | | | c) 5 min | |
| | | | d) 10 min | |

On constate que les méthodes utilisant la chaleur sont plus rapides.

Les larves abattues après 25 min de mise au contact avec la vapeur étaient gonflées d'eau.

La Demanderesse a constaté que le temps de montée en température est variable et dépend de la densité du volume de larves. Par ailleurs, il a été constaté que les larves se rassemblent au centre du contenant afin d'éviter la chaleur. Le volume de larves a donc une densité qui n'est pas homogène, dans l'espace et dans le temps. Le transfert thermique est donc difficilement modélisable puisqu'il dépend des espaces vides entre les larves, de la composition et de la taille des larves et des mouvements de ces dernières.

Lorsque le temps de mise en contact avec la vapeur est de 2min 40s, il n'est pas possible d'atteindre au cœur du volume de larves une température suffisante pour les tuer. La température léthale pour les larves est de 50°C. Lorsque le temps de mise au contact avec la vapeur est suffisant pour obtenir une température d'au moins 50°C, en particulier 95°C au centre du volume, toutes les larves sont abattues.

La différence de durée de mise au contact avec la vapeur produit néanmoins des différences lorsque les larves abattues sont utilisées pour la fabrication d'un aliment humide de type pâté comme expliqué ultérieurement.

Toutes les larves abattues par le chaud sont ensuite placées dans une enceinte à une température inférieure à 10°C, par exemple égale à 3°C. Lorsqu'elles sont à la température de l'enceinte, elles sont soit surgelées/congelées à -30°C, soit surgelées/congelées à -20°C (durée de la congélation : 12h à 24h) puis stockées à - 18°C ou -20°C.

Les larves abattues par la vapeur et par immersion dans de l'eau conservent une couleur blanche-beige stable et ne brunissent pas, ni pendant leur refroidissement, ni à l'état congelé.

### 2) Test de l'influence de la méthode d'abattage sur les caractéristiques physicochimiques d'une préparation alimentaire humide

Les dix essais suivants ont été réalisés :
1. Larves mises minimum 12h avant abattage dans une chambre froide à 4°C puis abattues par surgélation en froid mécanique à -30°C - (référence 1.1F)
2. Larves mises minimum 12h avant abattage dans une chambre froide à 4°C puis abattues par surgélation cryogénique à -60°C - (référence 2.1)
3. Larves à température ambiantes abattues par blanchiment vapeur court (5min/100°C) puis surgélation mécanique -30°C - (référence 3.1S)
4. Larves à température ambiantes abattues par blanchiment vapeur court (5min/100°C) puis congélation à -20°C chambre froide - (référence 3.1C)
5. Larves à température ambiantes abattues par blanchiment vapeur long (10min/100°C) puis surgélation mécanique -30°C - (référence 3.2S)
6. Larves à température ambiantes abattues par blanchiment vapeur long (10min/100°C) puis congélation à -20°C chambre froide - (référence 3.2C)
7. Larves à température ambiantes abattues par blanchiment à l'eau court (3min/100°C) puis surgélation mécanique -30°C - (référence 4.1S)
8. Larves à température ambiantes abattues par blanchiment à l'eau court (3min/100°C) puis congélation à -20°C chambre froide - (référence 4.1C)
9. Larves à température ambiantes abattues par blanchiment à l'eau long (6min/100°C) puis surgélation mécanique -30°C - (référence 4.2S)
10. Larves à température ambiantes abattues par blanchiment à l'eau long (6min/100°C) puis congélation à -20°C chambre froide - (référence 4.2C)

Dans tous les cas, le volume de larves abattues par la vapeur est un volume de 27,5cmx 47cm x 3,5 cm (IxLxh). Les larves sont disposées dans un bac en acier inoxydable ayant ces dimensions intérieures.

Les larves blanchies à l'eau chaude sont disposées dans un filet, lequel est immergé dans 10 litres d'eau à 100°C. La masse de larves est de 1,5kg.

### Analyses bactériologiques

Des analyses visant à quantifier la flore aérobie mésophile à 30°C par gramme de larve ont été effectuées sur les larves abattues par la vapeur et sur les larves abattues par le froid. Les analyses sont effectuées selon la norme NF EN ISO 4833-1 et le règlement européen 2073/20005 modifié.

Pour les larves abattues par la vapeur, la quantité de flore mésophile mesurée est inférieure à 10 UFC. Pour les larves abattues par le froid, la quantité de flore mésophile mesurée est supérieure à 30 000 UFC.

### Fabrication d'une préparation alimentaire humide de type pâtée pour chat

Les larves abattues et surgelées (-20°C ou -30°C) sont utilisées non décongelées pour fabriquer une préparation alimentaire humide de type pâté. Dans le cas présent, cette préparation humide est destinée au chat ; il s'agit donc d'une pâtée pour chat.

La méthode de fabrication de la préparation alimentaire humide est la suivante.

On mixe des grains de sorgho avec un mixeur/hachoir de cuisine. On prémélange la poudre de sorgho ainsi obtenue avec de la levure de bière, un appétent (contenant un sucre) et un mélange vitaminé avec un cutter Stephan 500 tours/min pendant 30 secondes, à 20°C. On ajoute les larves non décongelées, l'eau, les carottes et les pommes surgelées. On réduit en purée et on mélange le tout avec un Cutter Stephan 3000 tours/min pendant 1 à 2 minutes. La température du mélange est entre 0 et 2°C. On remplit des boîtes métalliques format ¹/₄ basse avec le mélange obtenu. Les couvercles métalliques (munis d'un opercule ouvrage facile, sans utilisation d'ouvre-boîte) sont sertis sur les boîtes. Les boîtes sont ensuite passées dans un autoclave vertical de marque Brouillon, sur le programme 3 pendant 1h47. Pendant 24 minutes au moins, les boîtes sont soumises à une température de 127°C qui assure leur stérilisation et la cuisson des ingrédients.

La composition des pâtées est indiquée dans le tableau 2 qui suit.

**[Tableau 2]**

| Ingrédients | Fournisseur | g pour 100g de produit fini |
|---|---|---|
| Larves surgelées/congelées | Fungfeed | 62,0 |
| Eau | / | 28,8 |
| Sorgho grain | Loos aliments | 4,0 |
| Carottes surgelées | METRO | 3,0 |
| Pommes surgelées | METRO | 2,0 |
| Levure de bière | Gerblé | 0,2 |
| Appétent | | 2,0 |
| mélange vitaminé | | 1,0 |

Le passage à l'autoclave permet d'obtenir une stérilisation de la composition alimentaire contenue dans les boîtes. Le pH de toutes les préparations s'est avéré stable (valeur du pH : entre 6,1 et 6,4). Les pâtées peuvent être conservées deux ans. Le tableau 3 suivant indique les durées nécessaires pour obtenir la température de 127°C à cœur dans les boîtes de 200g précitées. La durée indiquée dans le tableau 3 est la valeur stérilisatrice.

**[Tableau 3]**

| | Lot larves 1.1F | Lot de larves 2.1 | Lot larves 3.1S | Lot de larves 3.1C | Lot de larves 3.2S |
|---|---|---|---|---|---|
| Durée | Non suivi | 29,5 min | Non suivi | 35,8 min | Non suivi |
| | Lot larves 3.2C | Lot de larves 4.1S | Lot larves 4.1C | Lot de larves 4.2S | Lot de larves 4.2C |
| Durée | 36,9 min | Non suivi | 28,3 min | Non suivi | Non suivi |

Au vu des résultats du tableau 3, on constate que la valeur stérilisatrice est plus élevée pour les larves abattues avec la vapeur que celle obtenue pour les larves abattues par le froid ou par immersion dans de l'eau chaude. Cette différence est peut être due à une plus grande teneur en eau des larves blanchies à l'eau chaude, celles-ci se gorgeant d'eau lors de leur blanchiment. Néanmoins, la teneur en eau n'explique pas la différence de valeur stérilisatrice entre les larves abattues par la vapeur et les larves abattues par le froid, lesquelles ont également une faible prise d'eau, voire une prise d'eau nulle. On peut donc conjectuer que le transfert thermique différent provient d'une composition chimique différente des larves, celle-ci provenant de manière surprenante de la méthode d'abattage utilisée. Sans que la Demanderesse soit liée à l'explication qui suit, il est également possible que la pression osmotique soit plus faible lors du traitement à la vapeur que lors de l'immersion dans de l'eau chaude. Les larves traitées à la vapeur conserveraient leur eau (même teneur en eau que des larves vivantes) et cette dernière serait liée donc non biologiquement disposnible. Au contraire, les larves immergées se gorgeraient d'eau laquelle serait ensuite libérée lors de l'égouttage du fait de la perméabilité de la larve à l'eau. L'eau contenue dans les larves balchies par immersion est donc de l'eau libre ce qui se reflète dans la mesure de l'activité de l'eau laquelle est plus importante dans les larves blanchies par immersion que dans les larves traitées à la vapeur.

Diverses caracatéristiques des pâtées ont ensuite été étudiées. Le tableau 4 suivant en donne une synthèse rapide.

**[Tableau 4]**

| Lot de larves | Texture | Croûte noire | Couleur | Autres | Morceaux en bouche | Pellicule grise |
|---|---|---|---|---|---|---|
| 1.1F | Tranchable mais friable | Oui | grise | | Non | Non |
| 2.1 | Tranchable et moins friable que 1.1F | Oui | grise | | Non | Non |
| 3.1S | Tranchable moins friable que 1.1F et 2.1 | Non | Marron gris | Vire rapidement au gris-vert, couleur vase | Oui | Oui |
| 3.1C | Tranchable et tartinable | Non | Marron caramel | Ne vire pas | oui | Oui |
| | | | | Pas d'oxydation | | |
| 3.2S | Tranchable et tartinable | Non | marron caramel | Ne vire pas Pas d'oxydation | Oui | Non |
| 3.2C | Tranchable et tartinable | Non | marron caramel + homogène encore que 3.2S | Ne vire pas - Pas d'oxydation | Oui | Non |
| 4.1S | Tranchable et tartinable | Non | Marron caramel | Ne vire pas - Pas d'oxydation | Oui | Non |
| 4.1C | Tranchable et tartinable | Non | Marron caramel | Ne vire pas - Pas d'oxydation | Oui | Non |
| 4.2S | Tranchable et tartinable mais colle à la boîte | Non | Marron caramel | Ne vire pas - Pas d'oxydation | Oui | Non |
| 4.2C | Tranchable et tartinable mais colle à la boîte | Non | Marron caramel | Ne vire pas - Pas d'oxydation | Oui | Non |

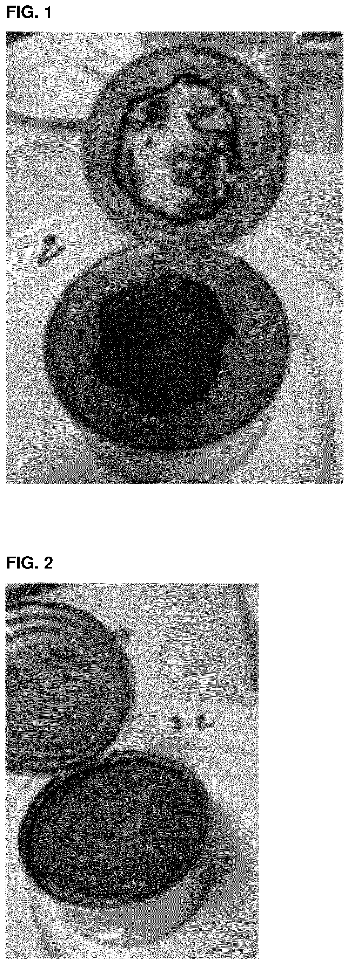

Les figures 1 et 2 représentent des photographies des surfaces des boîtes de pâtée venant d'être ouvertes. Sur la Fig. 1, on constate la présence d'une croute noire qui s'est formée sur la surface de la pâtée non en contact avec le couvercle. Sur la Fig. 2 laquelle représente la pâtée obtenue avec les larves 3.1S, on constate que la pellicule grise est plus fine et recouvre la totalité de la surface supérieure du bloc de pâtée.

L'odeur a été testée pour toutes les pâtées. Toutes les pâtées dégagent une odeur appétissante révélatrice des réactions de type Maillard ayant eu lieu lors de la cuisson-stérilisation de la pâtée. On détecte une odeur de pain grillé et de céréales toastées.

Néanmoins, pour les préparations obtenues avec les lots de larves abattues par le froid, on détecte une légère odeur d'officine probablement émise par le mélange vitaminé. Cette odeur n'apparaît pas pour les pâtées obtenues à partir de larves abattues par blanchiment à l'eau à 95°C ou traitées à la vapeur selon le procédé de l'invention.

L'odeur d'officine ainsi que la présence de la croûte noire rend les pâtées impropres à la vente ; le consommateur risque trop d'assimiler la présence de la croûte noire à une mauvaise qualité du produit ou à sa péremption. Il est probable que la croûte noire soit due à des processus enzymatiques, par exemple à la polyphénol oxydase, laquelle n'est pas dégradée par le froid mais l'est par la chaleur. La Demanderesse n'est néanmoins pas liée à cette explication.

La présence de la pellicule grise semble également indiquer la persistance de réactions enzymatiques mais dans une moindre mesure. Le changement de couleur à l'air semble indiquer une réaction d'oxydation, laquelle, de manière surprenante ne se produit pas lorsque la durée de mise au contact avec la vapeur est plus longue.

La texture de la pâtée ne doit être ni trop friable, ni trop collante, ni trop sèche. Les chats ont du mal à ingérer un aliment collant. La friabilité de la pâtée est gênante pour le maître qui a du mal à bien doser la quantité de pâtée en une fois sans en répandre partout parce qu'elle s'émiette. Les pâtées obtenues avec des larves abattues par immersion dans de l'eau chaude pendant 6 minutes sont trop collantes pour obtenir les faveurs des chats et de leur maître.

On constate que de manière surprenante, la méthode d'abattage des larves a une influence sur la physicochimie des larves abattues. Cette influence se retrouve dans diverses caractéristiques des pâtées obtenues après cuisson-stérilisation des larves abattues. Les larves abattues selon le procédé de l'invention permettent d'obtenir une pâtée satisfaisante pour l'odeur, la consistance et l'aspect visuel (absence de croûte). Lorsque le temps de mise en contact avec la vapeur est égal à 10min on obtient une pâtée dont la couleur est de plus satisfaisante pour le consommateur (brun caramel) et stable dans le temps, sans oxydation visible.

### 3) Caractérisation physicochimique des larves abattues

### A) Prise d'eau des larves abattues par la vapeur

Pour 3kg de larves fraîches et vivantes abattues par mise au contact de vapeur d'eau à 100°C pendant 10min, le poids moyen des larves abattues est de 3320 g (écart type de 43,6). La masse d'eau accumulée dans les larves est donc de 320g ce qui équivaut à une prise d'eau moyenne (prise d'eau = masse d'eau/masse de larves fraîches x100) égale à 10,67 %. Après congélation à -20°C , la valeur moyenne de la masse des larves est égale à 3192g avec un écart type de 39,8 g. On constate une perte d'eau lors de la congélation. Après l'étape de congélation, la valeur moyenne de la prise d'eau est de 6,4%.

### B) Densité

La densité des larves abattues et surgelées à -20°C a été mesurée à l'aide d'un contenant déterminé. On remplit le contenant d'eau et on le pèse. On le vide ensuite et on le remplit des larves puis on le pèse. Le rapport des deux mesures donne la densité.

Densité des larves abattues par de la vapeur à 100°C pendant 10 min puis surgelées à -20°C : 301,54g/L / 311,20 g/L / 319,64 g/L (valeur moyenne 310,8 g/L écart type de 9,1 g/l)

Densité des larves abattues par blanchiment par immersion dans de l'eau à 95°C puis surgélation à -20°C : 410,50 g/L / 410,56 g/L/ 427,83 g/L (valeur moyenne 416,3 g/L écart type 10,0 g/l)

### C) Activité de l'eau sur larves entières

L'activité de l'eau a été mesurée selon une méthode interne MMIT 033B adaptée de la norme NF ISO 18787 : 2017. La détermination de l'activité de l'eau (Aw) s'effectue sur le produit entier décongelé.

C'est une mesure du point de rosée (Aqualab 4TE Decagon) : l'échantillon est introduit dans une chambre de mesure hermétique contenant un miroir dont on peut faire varier la température. Le miroir est refroidi jusqu'à ce qu'il apparaisse de la condensation à la surface. Cette technique de mesure de l'Aw repose sur le fait que l'air peut être refroidi jusqu'au point de saturation sans modification de la teneur en eau. A l'équilibre, l'humidité relative de l'air présent dans la chambre est égale à l'activité de l'eau (Aw) de l'échantillon. On détermine la température exacte (point de rosée) à laquelle la condensation de la vapeur d'eau se produit. La température de la surface de l'échantillon est également enregistrée. A partir de ces deux températures, on peut déterminer l'Aw Le résultat est une moyenne de 2 déterminations minimum si Δ<0,01. La mesure est effectuée à 25°C.

Valeurs mesurées pour les larves abattues par de la vapeur à 100°C pendant 10 min puis surgelées à -20°C : 0,968 / 0,976 / 0,981 valeur moyenne 0,975 (mesurée après 78 jours de congélation)

Valeurs mesurées pour les larves abattues par blanchiment par immersion dans de l'eau à 95°C puis surgélation à -20°C : 0,990 /0,997 valeur moyenne 0,994 (mesurée après 146 jours de congélation).

Étant donné que l'activité de l'eau a tendance à diminuer pendant la congélation (plus un aliment est congelé longtemps, plus l'activité de l'eau dans cet aliment diminue), on constate que les larves de l'invention qui ont pourtant été congelées moins longtemps que celles obtenues par immersion et congélation présentent, de manière inattendue, une activité de l'eau plus basse.

### D) Analyses nutritionnelles des larves

Le Tableau 5 suivant regroupe les résultats obtenus.

**[Tableau 5]**

| Larves | Abattage vapeur | Abattage surgélation | Abattage immersion eau |
|---|---|---|---|
| Valeur énergétique (kcal/100g) | 181 | 210 | 202 |
| Protéines (g/100g)/ Azote total (g/100g) | 21,0 (±0,7)/ 3,36 (±0,12) | 18,6 (±0,7) / 2,98 (±0,11) | 22,5 (±0,8) / 3,61 (±0,12) |
| Glucides totaux(g/100g)/ glucides assimilables (g/100g) | 4,4 /4,4 | 2,7/2,7 | 3,6/3,6 |
| Lipides (g/100g) | 8,9 (±0,7) | 13,8 (±0,8) | 10,9 (±0,_) |
| Cendres (g/100g) | 1,35 (±0,18) | 1,14 (±0,17) | 1,41 (±0,18) |
| Humidité (g/100g) | 64,4 (±0,7) | 63,7 (±0,7) | 61,6 (±0,7) |

Le calcul de la valeur énergétique est mis en œuvre selon le règlement UE n° 1169/2011. Le taux de protéines est calculé à partir du dosage par titrimétrie de l'azote par la méthode Kjeldahl. La teneur en glucides est calculée en faisant la différence avec les autres teneurs, la teneur en lipides est déterminée par gravimétrie au micro-ondes. L'échantillon est hydrolysé puis une extraction est effectuée grâce à d'acide sulfurique et de cyclohexane via la technique du micro-onde. La matière grasse est ensuite déterminée par pesée après évaporation du cyclohexane. Le taux de cendres est déterminé par thermogravimétrie à 550°C pendant 4 heures. Le taux d'humidité est déterminé par thermogravimétrie à 70°C.

Les analyses sont effectuées sur les larves abattues et congelées puis décongelées. Les larves abattues par surgélation sont restées congelées 146 jours. Les larves abattues par la vapeur sont restées congelées 78 jours et les larves abattues par immersion sont restées congelées 146 jours avant les analyses.

Au vu des résultats du tableau 5 précité, on constate que de manière surprenante, les larves abattues selon le procédé de l'invention contiennent moins de protéines que les larves abattues par le froid, moins de lipides et plus de minéraux que les larves abattues et surgelées par les autres méthodes. Elles contiennent également plus d'eau que les autres larves abattues ce qui est surprenant car il était plausible que les larves abattues par immersion se gorgent plus facilement d'eau.

Les larves abattues à la vapeur ont été soumises à la vapeur d'eau à 100°C pendant 10min. Les larves abattues par immersion ont été immergées 2 min à 95°C.

## Revendications

1. Procédé d'abattage et de conservation de larves d'insectes et/ou d'insectes lesquels sont disposés de manière à former un volume, **caractérisé en ce que** l'on soumet ledit volume de larves d'insectes et/ou d'insectes à de la vapeur d'eau à pendant une durée t1 suffisante pour que la température à l'intérieur dudit volume et en particulier au centre dudit volume atteigne une valeur égale ou supérieure à 50°C et notamment égale à 60°C, 70°C, 80°C, 90°C ou 95°C, **en ce que** l'on surgèle/congèle lesdites larves et/ou insectes abattus, éventuellement après leur refroidissement jusqu'à une température donnée et **en ce qu'**on stocke lesdites larves et/ou insectes abattus et congelées/surgelées à une température négative.

2. Procédé selon la revendication 1, **caractérisé en ce que** l'on maintient la température au centre dudit volume à une valeur supérieure à 50°C et notamment égale à 60°C, 70°C, 80°C, 90°C ou 95°C pendant une durée t2 telle que la durée totale de l'étape de traitement à la vapeur est supérieure ou égale à 6min, 7min, 8min, 9min, 10 min, 11 min et inférieure ou égale à 20min.

3. Procédé selon l'une quelconque des revendications précédentes, **caractérisé en ce que** lesdits insectes et/ou lesdites larves sont choisies parmi les insectes et/ou les larves des insectes suivants : la mouche soldat noire (*Hermetia Illucens*), la mouche domestique (*Musca domestica*), le ténébrion meunier (*Tenebrio molitor*), le petit ténébrion mat (*Alphitobius diaperinus*), le grillon domestique (*Acheta domesticus*), le grillon domestique tropical (*Gryllodes sigillatus*), le grillon des steppes (*Gryllus assimilis*) et les mélanges de larves et/ou insectes d'au moins deux desdits insectes.

4. Procédé selon l'une quelconque des revendications précédentes, **caractérisé en ce que** ledit volume de larves et/ou d'insectes est sensiblement égal à ou supérieur à 4000 cm³ et inférieur ou égale à 5000 cm³.

5. Procédé selon l'une quelconque des revendications précédentes, **caractérisé en ce qu'**il est mis en œuvre dans un four à vapeur, les larves et/ou insectes étant disposés dans un contenant thermiquement conducteur.

6. Procédé selon l'une quelconque des revendications précédentes, **caractérisé en ce que** la durée du traitement à la vapeur est telle que la prise d'eau des larves et/ou insectes après traitement à la vapeur et avant congélation/surgélation est inférieure ou égale à 20%, notamment inférieure ou égale à 15% et égale ou supérieure à 7%.

7. Procédé selon l'une quelconque des revendications précédentes **caractérisé en ce que** ladite étape de congélation/surgélation est mise en œuvre de manière que la prise d'eau de ladite larve et/ou dudit insecte abattu et congelé/surgelé est sensiblement égale ou supérieure à 3%, notamment sensiblement égale à 5% et sensiblement égale ou inférieure à 9% et notamment sensiblement égale à 7%.

8. Larves et/ou insectes abattus et congelés/surgelés pouvant être obtenues selon le procédé selon l'une quelconque des revendications 1 à 7, **caractérisés en ce qu'**ils présentent une activité de l'eau égale ou supérieure à 0,960 et égale ou inférieure à 0,981 **et/ou une densité égale ou supérieure à 295 et égale ou inférieure à 325 et/ou** une valeur énergétique inférieure ou égale à 210 kcal/100g et/ou une teneur en glucides supérieure ou égale à 4,0 g/100g et/ou une teneur en lipides inférieure ou égale à 10g/100g et/ou une teneur en protéines inférieure ou égale à 22 g/100g.

9. Procédé de fabrication d'un aliment **caractérisé en ce que** l'on réduit en morceaux des larves et/ou insectes selon la revendication 8 et **en ce que** l'on mélange lesdits morceaux avec une composition alimentaire laquelle contient une farine d'au moins une céréale et au moins un fruit et/ou au moins un légume, notamment au moins un fruit et/ou au moins un légume surgelé(s) et **en ce que** l'on fait cuire ledit mélange.

10. **Aliment sec ou humide obtenu après cuisson/stérilisation, caractérisé en ce qu'il est obtenu selon le procédé de la revendication 9.**
